(19) Europäisches Patentamt / European Patent Office / Office européen des brevets

(11) **EP 4 067 446 B1**

## (12) EUROPEAN PATENT SPECIFICATION

(45) Date of publication and mention
of the grant of the patent:
**24.09.2025 Bulletin 2025/39**

(51) International Patent Classification (IPC):
**C09D 11/38** (2014.01)    **C09D 11/107** (2014.01)
**C09D 11/322** (2014.01)

(21) Application number: **22161400.1**

(22) Date of filing: **10.03.2022**

(52) Cooperative Patent Classification (CPC):
**C09D 11/322; C09D 11/107; C09D 11/38**

(54) **WATER-BASED INK FOR INK-JET RECORDING, INK-JET RECORDING APPARATUS, INK-JET RECORDING METHOD AND INK STORING CONTAINER**

TINTE AUF WASSERBASIS FÜR TINTENSTRAHLAUFZEICHNUNG, TINTENSTRAHLAUFZEICHNUNGSGERÄT, TINTENSTRAHLAUFZEICHNUNGSVERFAHREN UND TINTENSPEICHERBEHÄLTER

ENCRE À BASE D'EAU POUR ENREGISTREMENT À JET D'ENCRE, IMPRIMANTE À JET D'ENCRE, PROCÉDÉ D'IMPRESSION À JET D'ENCRE ET CONTENANT DE STOCKAGE D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2021 JP 2021059639**

(43) Date of publication of application:
**05.10.2022 Bulletin 2022/40**

(73) Proprietor: **Brother Kogyo Kabushiki Kaisha Nagoya Aichi 467-8561 (JP)**

(72) Inventors:
- **OKUMURA, Yuki**
  **Nagoya, 467-8562 (JP)**
- **INOUE, Harumitsu**
  **Nagoya, 467-8562 (JP)**

(74) Representative: **J A Kemp LLP**
**80 Turnmill Street**
**London EC1M 5QU (GB)**

(56) References cited:
**EP-A1- 1 266 941        EP-A2- 2 727 969**
**US-A1- 2013 281 593     US-A1- 2015 361 285**
**US-A1- 2016 376 456**

**Description**

BACKGROUND

The present disclosure relates to use of a water-based ink for ink-jet recording, an ink-jet recording apparatus, an ink-jet recording method and an ink storing container.

As a water-based ink for ink-jet recording which has an excellent fixing property to coated paper, there is proposed a water-based ink containing a vinyl chloride-acrylic-based copolymer.

In order to fix the water-based ink containing the vinyl chloride-acrylic-based copolymer to the coated paper, however, it is necessary to perform heating and drying at a high temperature and for a long period of time. As related prior art US 2015361285, EP 1266941, US 2016376456 and US 2013281593 might be cited.

Accordingly, there is a demand for the improvement in the fixing property in drying at a low temperature and for a short period of time. Further, regarding an ink-jet recording using the water-based ink for ink-jet recording, further improvements in the image quality and in the maintainability are desired.

SUMMARY

In view of the above situation, an object of the present disclosure is to provide a use of water-based ink for ink-jet recording which has excellent fixing property, image quality and maintainability, and which is fixable to coated paper by the drying at a low temperature and for a short period of time.

In order to achieve the above-described object, there is provided a use according to claim 1, an apparatus according to claim 2, and a method according to claim 3.

The water-based ink for ink-jet recording of the present disclosure includes the surfactant and the trimethylglycine, in addition to the acrylic-based resin particles of which glass transition temperature is within the predetermined range; and in the water-based ink for ink-jet recording, the static surface tension is made to be within the predetermined range. Thus, the water-based ink for ink-jet recording of the present disclosure has excellent fixing property, image quality and maintainability, and is fixable to the coated paper by the drying at a low temperature and for a short period of time. Accordingly, the water-based ink for ink-jet recording of the present disclosure is used on the coated paper.

BRIEF DESCRIPTION OF THE DRAWINGS

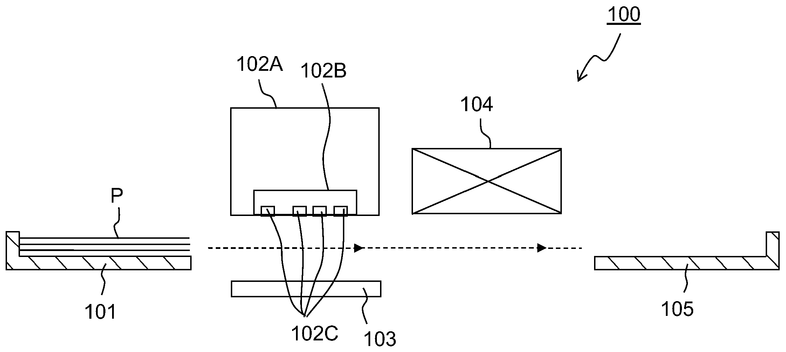

The FIGURE is a schematic perspective view depicting the configuration of an example of an ink-jet recording apparatus of the present disclosure.

DETAILED DESCRIPTION

The water-based ink for ink-jet recording (hereinafter referred also to as a "water-based ink" or an "ink" in some cases) of the present disclosure will be explained. The water-based ink of the present disclosure includes a pigment, acrylic-based resin particles, a surfactant, trimethylglycine, and water.

The pigment is dispersible in water by, for example, a resin for dispersing pigment (resin dispersant). The pigment is not particularly limited, and is exemplified, for example, by carbon black, an inorganic pigment, an organic pigment, etc. The carbon black is exemplified, for example, by furnace black, lamp black, acetylene black, channel black, etc. The inorganic pigment is exemplified, for example, by titanium oxide, inorganic pigments based on iron oxide, inorganic pigments based on carbon black, etc.

The organic pigment is exemplified, for example, by azo-pigments such as azo lake, insoluble azo-pigment, condensed azo-pigment, chelate azo-pigment, etc.; polycyclic pigments such as phthalocyanine pigment, perylene and perynon pigments, anthraquinone pigment, quinacridone pigment, dioxadine pigment, thioindigo pigment, isoindolinone pigment, quinophthalone pigment etc.; dye lake pigments such as basic dye type lake pigment, acid dye type lake pigment etc.; nitro pigment; nitroso pigment; aniline black daylight fluorescent pigment; and the like. Further, a pigment which is different from those as described above is usable, provided that the pigment is dispersible in a water phase. Specific examples of these pigments are exemplified, for example, by C. I. Pigment Blacks 1, 6, and 7; C. I. Pigment Yellows 1, 2, 3, 12, 13, 14, 15, 16, 17, 55, 74, 78, 150, 151, 154, 180, 185, and 194; C. I. Pigment Oranges 31 and 43; C. I. Pigment Reds 2, 3, 5, 6, 7, 12, 15, 16, 48, 48:1, 53:1 57, 57:1, 112, 122, 123, 139, 144, 146, 149, 150, 166, 168, 175, 176, 177, 178, 184, 185, 190, 202, 209, 221, 222, 224 and 238; C. I. Pigment Violets 19 and 196; C. I. Pigment Blues 1, 2, 3, 15, 15:1, 15:2, 15:3, 15:4, 16, 22 and 60; C. I. Pigment Greens 7 and 36; and a solid solution of any one of the above-described pigments; etc.

A method of dispersing the above-described pigment by using the resin for dispersing pigment is exemplified, for example, by dispersing the pigment by using a dispersing apparatus. The dispersing apparatus used for dispersing the pigment is not particularly limited, provided that the dispersing apparatus is a general dispersing apparatus; the dispersing apparatus is exemplified, for example, by a ball mill, a roll mill, a sand mill (for example, a sand mill of a high-speed type), etc.

The pigment may be a self-dispersible pigment. The self-dispersible pigment is dispersible in water without using any dispersing agent, for example, owing to the situation that at least one of a hydrophilic functional group and a salt thereof including, for example, a carbonyl group, a hydroxyl group, a carboxylic acid group, a sulfonic acid group, and a phosphoric acid group is introduced into particles of a pigment by the chemical bond directly or with any group intervening therebetween. As the self-dispersible pigment, it is possible to use a self-dispersible pigment in which the pigment is subjected to a treatment by any one of methods described, for example, in Japanese Patent Application Laid-open No. 8-3498 corresponding to United States Patent No. 5,609,671, Published Japanese Translation of PCT International Publication for Patent Application No. 2000-513396 corresponding to United States Patent No. 5,837,045, Published Japanese Translation of PCT International Publication for Patent Application No. 2008-524400 corresponding to United States Patent Application Publication No. 2006/0201380, Published Japanese Translation of PCT International Publication for Patent Application No. 2009-515007 corresponding to United States Patent Application Publication Nos. 2007/0100024 and 2007/0100023, Published Japanese Translation of PCT International Publication for Patent Application No. 2011-515535 corresponding to United States Patent Application Publication No. 2009/0229489, etc. It is possible to use, as a material for the self-dispersible pigment, any one of the inorganic pigment and the organic pigment. Further, the pigment which is suitable to perform the treatment as described above is exemplified by carbon blacks including, for example, "MA8" (trade name) and "MA100" (trade name) produced by MITSUBISHI CHEMICAL CORPORATION, etc. As the self-dispersible pigment, it is allowable to use, for example, any commercially available product. The commercially available product includes, for example, "CAB-O-JET (a registered trade mark of CABOT CORPORATION) 200", "CAB-O-JET (registered trade mark) 250C", "CAB-O-JET (registered trade mark) 260M", "CAB-O-JET (registered trade mark) 270Y", "CAB-O-JET (registered trade mark) 300", "CAB-O-JET (registered trade mark) 400", "CAB-O-JET (registered trade mark) 450C", "CAB-O-JET (registered trade mark) 465M", and "CAB-O-JET (registered trade mark) 470Y" produced by CABOT CORPORATION; "BONJET (a registered trade mark of ORIENT CHEMICAL INDUSTRIES, LTD.) BLACK CW-2" and "BONJET (registered trade mark) BLACK CW-3" produced by ORIENT CHEMICAL INDUSTRIES, LTD.; and "LIOJET (a registered trade mark of TOYO INK MFG. CO., LTD.) WD BLACK 002C" produced by TOYO INK MFG. CO., LTD.; and the like.

A solid content blending amount of the pigment (pigment solid component amount) in the entire amount of the water-based ink is not particularly limited, and may be appropriately determined in accordance with, for example, a desired optical density, etc. The pigment solid component amount is, for example, in a range of 1% by weight to 10% by weight, in a range of 2% by weight to 8% by weight, or in a range of 3% by weight to 7% by weight. The pigment solid component amount is the weight only of the pigment, and does not include the weight of the resin dispersant, etc. (namely, conversion in an effective ingredient amount).

One kind of the pigment may be used singly, or two or more kinds of the pigment may be used in combination.

The water is preferably ion-exchange water or purified water (pure water). A blending amount of the water with respect to the entire amount of the water-based ink (water ratio) is appropriately determined in accordance with a desired ink characteristic, etc. The water ratio may be, for example, a balance of the other components. The blending amount of the water is, for example, in a range of 60% by weight to 90% by weight, in a range of 65% by weight to 85% by weight, or in a range of 70% by weight to 80% by weight.

As described above, the water-based ink of the present disclosure further includes the acrylic-based resin particles of which glass transition temperature (Tg) is not less than 25°C and less than 50°C, the surfactant and the trimethylglycine.

The glass transition temperature (Tg) of the acrylic-based resin particles is, for example, not less than 25°C and less than 50°C, or is not less than 30°C and less than 50°C. The acrylic resin particles may be, for example, those included in a resin emulsion. The resin emulsion is composed, for example, of the acrylic-based resin particles and a dispersion medium (for example, water, etc.), wherein the acrylic-based resin particles are dispersed with respect to the dispersion medium with a specific particle diameter, not being in a dissolved state. As the acrylic-based resin particles, for example, a commercially available product of acrylic-based resin particles may be used. The acrylic-based resin particles are, for example, resin particles of which main component is polyacrylic acid or polyacrylate, and a monomer usable for forming the acrylic-based resin particles is exemplified by: (meth)acrylic acid, and (meth)acrylate such as methyl(meth)acrylate, ethyl(meth)acrylate, propyl(meth)acrylate, isopropyl(meth)acrylate, butyl(meth)acrylate, isobutyl (meth)acrylate, t-butyl(meth)acrylate, pentyl(meth)acrylate, 2-ethyhexyl(meth)acrylate, octyl(meth)acrylate, cyclopropyl(meth)acrylate, cyclopentyl(meth)acrylate, cyclohexyl(meth)acrylate, cycloheptyl(meth)acrylate, cyclooctyl(meth)acrylate, phenyl(meth)acrylate, benzyl(meth)acrylate, tolyl(meth)acrylate, xylyl(meth)acrylate, phenetyl(meth)acrylate, etc.

The commercially available product of the acrylic-based resin particles is exemplified, for example, by "MOWINYL (a registered trade mark of JAPAN COATING RESIN CO., LTD.) 6899D" (Tg: 49°C; effective component concentration: 46% by weight), "MOWINYL (registered trade mark) DM774" (Tg: 30°C; effective component concentration: 46% by weight), manufactured by JAPAN COATING RESIN CO., LTD.; "SAIVINOL (a registered trade mark of SAIDEN CHEMICAL INDUSTRY CO., LTD.) EK-1920 (Tg: 40°C; effective component concentration: 35% by weight) manufactured by SAIDEN CHEMICAL INDUSTRY CO., LTD., etc.

A solid content blending amount (may be referred also to as an "conversion in the effective component amount") of the acrylic-based resin particles with respect to the entire amount of the water-based ink is not particularly limited, and can be appropriately determined. The solid content blending amount of the acrylic-based resin particles is, for example, in a range of 1% by weight to 10% by weight, in a range of 2% by weight to 8% by weight, or in a range of 3% by weight to 7% by weight. Note that in a case of using the resin emulsion including the acrylic-based resin particles, the term "conversion in the effective component amount" is, for example, the amount of the acrylic-based resin particles themselves, excluding the dispersion medium such as water, etc.

In a case that the Tg of the acrylic-based resin particles is less than 25°C, the coefficient of elasticity of the acrylic-based resin particles is lowered in a case that the water-based ink after being dried is exposed to a room-temperature environment (for example, 20°C, etc.). Accordingly, the strength of a coated film is insufficient, and thus any sufficient fixing property cannot be provided.

An average particle diameter of the acrylic-based resin particles is, for example, in a range of 5 nm to 500nm, in a range of 20 nm to 300 nm, or in a range of 30 nm to 200 nm. The average particle diameter of the acrylic-based resin particles can be calculated as an arithmetic average diameter, for example, by using a dynamic light scattering particle diameter distribution measuring apparatus "LB-550" (trade name) manufactured by HORIBA, LTD.

Only one kind of the acrylic-based resin particles may be used singly, or two or more kinds of the acrylic-based resin particles may be used in combination.

The surfactant is a silicone-based surfactant. The silicone-based surfactant is exemplified, for example, by a polyether modified silicone-based surfactant, etc. The HLB (Hydrophilic-Lipophilic Balance) value of the surfactant is not less than 12. The HLB value can be measured, for example, by the phase inversion and titration method, etc. Example commercially available products of surfactant include: "SILFACE (a registered trade mark of NISSHIN CHEMICAL CO., LTD.) SAG002" (HLB value: 12), "SILFACE (registered trade mark) SAG005" (HLB value: 7; silicone-based surfactant), "SILFACE (registered trade mark) SAG503A" (HLB value: 11; silicone-based surfactant), "SILFACE (registered trade mark) SAG008" (HLB value: 7; silicone-based surfactant) manufactured by NISSHIN CHEMICAL CO., LTD.; "SURFLON (a registered trade mark of ASG SEIMI CHEMICAL CO., LTD.) S-241" (a fluorine-based surfactant), "SURFLON (registered trade mark) S-242 (a fluorine-based surfactant), "SURFLON (registered trade mark) S-243 (a fluorine-based surfactant), manufactured by ASG SEIMI CHEMICAL CO., LTD.; and the like.

A blending amount of the surfactant with respect to the entire amount of the water-based ink can be appropriately selected, depending on the purpose. The blending amount of the surfactant is, in a range of 2% by weight to 3% by weight.

Only one kind of the surfactant may be used singly, or two or more kinds of the surfactant may be used in combination.

The trimethylglycine is an amphoteric organic compound having a structure in which an amino group of glycine is subjected to the trimethylation and forming an inner salt. The trimethylglycine is also referred to, for example, as N,N,N-trimethylglycine, betaine, etc. Although the trimethylglycine is used as a humectant in the water-based ink, in the present disclosure, it is significant that the trimethylglycine is used together with acrylic-based resin particles having a specific Tg in an ink having a predetermined surface tension, as will be described later on.

A blending amount of the trimethylglycine with respect to the entire amount of the water-based ink can be appropriately selected, depending on the purpose. The blending amount of the trimethylglycine is, for example, in a range of 1% by weight to 10% by weight, in a range of 2% by weight to 9% by weight, or in a range of 3% by weight to 8% by weight.

A solid content blending amount (R) of the acrylic-based resin particles and a blending amount (B) of the trimethylglycine in the entire amount of the water-based ink must satisfy $0.6 \leq R/B \leq 1.5$ (hereinafter referred also to as a "condition X"). This is because in a case that the R/B is less than 0.6, the trimethylglycine which is a solid body is increased in an ink film (a film solidified by an acyclic resin) formed on a paper surface, which in turn lowers the uniformity of the film; and in a case that the R/B exceeds 1.5, the effect of adding the trimethylglycine (which will be described later on) is lowered and a tendency that a film of the ink is formed on a nozzle surface of a head is increased. The solid content blending amount (R) of the acrylic-based resin particles and the blending amount (B) of the trimethylglycine may be adjusted appropriately so as to satisfy the condition X; and the solid content blending amount (R) of the acrylic-based resin particles and the blending amount (B) of the trimethylglycine are, for example, similar, respectively, to those as described above.

Further, a solid content blending amount (P) of pigment, the solid content blending amount (R) of the acrylic-based resin particles and the blending amount (B) of the trimethylglycine in the entire amount of the water-based ink must satisfy $1.2 \leq (P+R)/B \leq 3.2$ (hereinafter referred also to as a "condition Y"). The solid content blending amount (P) of the pigment, the solid content blending amount (R) of the acrylic-based resin particles and the blending amount (B) of the trimethylglycine may be adjusted appropriately so as to satisfy the condition Y; and the solid content blending amount (P) of the pigment, the solid content blending amount (R) of the acrylic-based resin particles and the blending amount (B) of the trimethylglycine are, for example, similar, respectively, to those as described above. This is because in a case that the (P+R)/B is less than 1.2, the trimethylglycine which is a solid body is increased in an ink film formed on a paper surface, with respect to the sum of the acrylic resin and the pigment each of which is a solid constituent of the ink film formed on the paper surface, which in turn lowers the uniformity of the film; and in a case that the (P+R)/B exceeds 3.2, the effect of adding the trimethylglycine (which will be described later on) is lowered and a tendency that a film of the ink is formed on a nozzle surface of a head is increased.

Furthermore, a blending amount (S) of a substance which includes the pigment and the acrylic-based resin particles and of which simple substance is solid at a normal temperature, and a blending amount (L) of a substance which is different from the water and which is liquid at a normal temperature (25°C), and the blending amount (W) of the water may satisfy, for example, L < S < W (hereinafter referred also to as a "condition Z"). The substance of which simple substance is solid at the normal temperature may include, for example, trimethylglycine, a resin dispersion, another substance of which simple substance is solid at the normal temperature, etc. The substance of which simple substance is liquid at the normal temperature may include, for example, the surfactant, a penetrant, a humectant (excluding the trimethylglycine), another organic solvent, etc. The blending amount (S) of the substance of which simple substance is solid at the normal temperature, the blending amount (L) of the substance which is liquid at the normal temperature, and the blending amount (W) of the water may be adjusted appropriately so as to satisfy the condition Z, and are not particularly limited. The reason for defining the condition Z is as follows. In a case that the ink is discharged to the recording medium and after water which is easily evaporated is removed, a solid content is consequently dispersed (dissolved) in the liquid (solvent). By making the amount of the solid content to be greater than that of the liquid, it is possible to reduce the fluidity of the solid matter due to such a situation that the liquid slightly disappears or is removed from the surrounding of the solid matter by evaporation, permeation, etc. With this, it is possible to easily achieve an object which is the drying (fixing) for a short period of time. The blending amount (S) of the substance of which simple substance is solid at the normal temperature is, for example, in a range of 5% by weight to 25% by weight, in a range of 7% by weight to 22% by weight, or in a range of 10% by weight to 20% by weight; the blending amount (L) of the substance which is liquid at the normal temperature is, for example, in a range of 4% by weight to 15% by weight, in a range of 4% by weight to 12% by weight, or in a range of 5% by weight to 11% by weight; and the blending amount (W) of the water is, for example, similar to the blending amount of the water as described above.

Further, in the water-based ink of the present disclosure, the static surface tension is not more than 27 mN/m. Specifically, the static surface tension is, for example, in a range of 18 mN/m to 27 mN/m, in a range of 20 mN/m to 26.5 mN/m, or in a range of 22 mN/m to 26 mN/m. Note that the lower limit value of the static surface tension is not particularly limited, and may be, for example, not more than 18 mN/m. The static surface tension can be measured, for example, by using a "CBVP-Z" (trade name) (surface tensiometer) manufactured by KYOWA INTERFACE SCIENCE CO., LTD. A measuring temperature of the static surface tension is, for example, 25°C. The static surface tension of the water-based ink can be adjusted by, for example, changing the blending amounts of the respective components of the water-based ink. Specifically, the static surface tension of the water-based ink can be adjusted by, for example, changing the kind and the blending amount, etc., of the surfactant included in the water-based ink.

The water-based ink includes the acrylic-based resin particles of which Tg is not less than 25°C and less than 50°C, the surfactant and the trimethylglycine, and thus the water-based ink has the excellent fixing property, image quality and maintainability, and is fixable also to the coated paper by a drying at a low temperature and for a short period of time. The mechanism by which the fixing property, the image quality and the maintainability are improved is presumed, for example, as follows. It is known to add a polymer to the water-based ink to thereby improve the fixing property, of the water-based ink, with respect to the coated paper (namely, the fixing property with respect to the recording medium). In a case that a polymer of which Tg is low is added to a water-based ink for the purpose of improving the fixing property by the drying at the low temperature and for the short period of time, a high-volatile solvent is often used in order to improve the volatility of the solvent to thereby fasten the drying of the ink. Further, for the purpose of suppressing of occurrence of a white streak-like (while line-like) uneven part (banding), it is a general practice to add a surfactant in order to make the contact angle of the liquid droplet on the paper surface at the time of the ink-jet recording be small. Since the ink spreads easily on the paper surface by the addition of the surfactant to the ink, this consequently also fasten the drying of the ink on the paper surface. However, in a case that the high volatile solvent is used, there is such a fear that the water-based ink might be more likely to form a film also in a nozzle surface of an ink-jet head, which in turn might affect the maintainability. On the other hand, in the case that the contact angle of the liquid droplet on the paper surface is made small by the surfactant, the contact angle of the liquid droplet becomes small also in the nozzle surface of the ink-jet head, which in turn leads to such a fear that the water-based ink might be less likely to be removed at a time of wiping, which in turn might affect the maintainability. Therefore, in order to improve the maintainability, it is necessary to make the contact angle of the liquid droplet at the time of the ink-jet recording to be great, while lowering the volatility of the solvent. As described above, in a case that the high volatile solvent and the surfactant are used in the ink, the fixing proper and image quality and the maintainability are in the relationship of trade-off. In contrast, by adding the trimethylglycine to the water-based ink, the trimethylglycine remains in an ink residue solidified in the nozzle surface of the ink-jet head, and re-dissolves in the solvent in the ink at the time of the wiping, thereby making it possible to improve the maintainability. On the other hand, the trimethylglycine is discharged or ejected from the ink-jet head in a state that the trimethylglycine is dissolved in the water-based ink, and penetrates into the inside of the coated paper at a time of landing on the coated paper; thus, the trimethylglycine does not adversely affect the film performance by the acrylic-based resin particles and the wetting and spreading (wettability) on the coated paper by the surfactant. Further, by making the static surface tension be within the predetermined range, the contact angle of the liquid droplet at the time of the ink-jet recording is made smaller, thereby improving the wetting and spreading (wettability) on the coated paper. Namely, the water-based ink of the present disclosure is capable of improving the fixing property by the acrylic-based resin particles, is capable of improving the image quality by the using surfactant and thus adjusting the static surface tension to be within the predetermined range, and is capable of improving the maintainability by the trimethylglycine. Note that, however, this mechanism is merely a presumption, and the present disclosure is not limited to or restricted by this. Note that the temperature at the time of the drying will be explained in an ink-jet recording method of the present disclosure which will be described later on.

Further, the water-based ink satisfies the condition (Z) and thus has further excellent fixing property, image quality and maintainability. The mechanism by which the fixing property, the image quality and the maintainability are further improved is presumed, for example, as follows. Generally, in a case that the solvent of the water-based ink remaining on the coated paper is great, there is such a problem that the film is less likely to form and that the fixing property is lowered. In view of this, by making the blending amount of the water be great in the water-based ink, the remaining solvent is quite little in a case that the water on the coated paper is evaporated, and thus the film is more likely to be formed and the fixing property can be improved. On the other hand, in a case that the remaining solvent is great in the nozzle surface of the ink-jet head, the viscosity of a solid matter in the nozzle surface in an evaporating process becomes to be high, which in turn leads to such a problem that the solid matter is less likely to be wiped off by the wiping. In view of this, by making the blending amount of the water be great in the water-based ink, the remaining solvent becomes to be quite little in the evaporating process, and thus the viscosity of the coated film becomes to be low. Due to the low viscosity of the coated film, the coated film becomes to be in a state of a dried, trimethylglycine-containing solid matter for a short period of time, and re-dissolves at the time of the wiping, thereby making it possible to improve the maintainability. This mechanism, however, is a mere presumption, and the present disclosure is not limited to this.

Since the water-based ink of the present disclosure is fixable also to the coated paper with the drying at a lower temperature and for a shorter period of time, a user is capable, for example, of safely performing printing using the water-based ink of the present disclosure.

The water-based ink may further include a water-soluble organic solvent which is different from the trimethylglycine. The water-soluble organic solvent is exemplified, for example, by a humectant which prevents the water-based ink from drying in a nozzle surface of the ink-jet head and a penetrant which adjusts the drying velocity on the recording medium.

The humectant is not particularly limited, and is exemplified, for example, by lower alcohols such as methyl alcohol, ethyl alcohol, n-propyl alcohol, isopropyl alcohol, n-butyl alcohol, sec-butyl alcohol, tert-butyl alcohol, etc.; amides such as dimethylformamide, dimethylacetamide, etc.; ketones such as acetone, etc.; ketoalcohols (ketone alcohols) such as diacetone alcohol, etc.; ethers such as tetrahydrofuran, dioxane, etc.; polyethers such as polyalkylene glycol, etc.; polyvalent alcohols such as alkylene glycol, glycerol, trimethylolpropane, trimethylolethane, etc.; 2-pyrrolidone; N-methyl-2-pyrrolidone; 1,3-dimethyl-2-imidazolidinone; and the like. The polyalkylene glycol is exemplified, for example, by polyethylene glycol, polypropylene glycol, etc. The alkylene glycol is exemplified, for example, by ethylene glycol, propylene glycol, butylene glycol, diethylene glycol, triethylene glycol, dipropylene glycol, tripropylene glycol, thiodiglycol, hexylene glycol, etc. It is allowable that one kind of the humectant as described above is used singly, or two or more kinds of the humectant are used in combination. Among the above-described humectants, the humectant is preferably a polyvalent alcohol such as alkylene glycol, glycerol, etc.

The blending amount of the humectant in the entire amount of the water-based ink is, for example, in a range of 0% by weight to 95% by weight, in a range of 5% by weight to 80% by weight, or in a range of 5% by weight to 50% by weight.

The penetrant preferably includes at least one of alkylene based diol and a glycol ether-based compound. The alkylene-based diol is exemplified, for example, by: 1,2-hexanediol, 1,2-heptanediol, 1,3-propanediol, 1,2-butanediol, 1,3-butanediol, 1,4-butanediol, 2,3-butanediol, 3-methyl-1,3-butanediol, 1,2-pentanediol, 1,5-pentanediol, 1,6-hexanediol, 2-methyl-2,4-pentanediol, 3-methyl-1,5-pentanediol, etc. The glycol ether-based compound is exemplified, for example, by: ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, tripropylene glycol-n-butyl ether, etc. One kind of the penetrant may be used singly, or two or more kinds of the penetrant may be used in combination.

The blending amount of the penetrant with respect to the entire amount of the water-based ink is, for example, in a range of 0% by weight to 20% by weight, in a range of 0% by weight to 15% by weight, or in a range of 1% by weight to 6% by weight.

The water-based ink may further include a conventionally known additive, as necessary. The additive is exemplified, for example, by surfactants which are different from the silicone-based surfactant, pH-adjusting agents, viscosity-adjusting agents, surface tension-adjusting agents, fungicides, etc. The viscosity-adjusting agents are exemplified, for example, by polyvinyl alcohol, cellulose, water-soluble resin, etc.

Next, an ink storing container of the present disclosure is an ink storing container including a water-based ink for ink-jet recording, wherein the water-based ink is the water-based ink for ink-jet recording of the present disclosure. The ink storing container is exemplified, for example, by an ink cartridge, a tank, a pouch, etc. It is allowable to use, as the body of the ink storing container, a conventionally known body for an ink storing container.

Next, an ink-jet recording apparatus and an ink-jet recording method of the present disclosure will be explained.

The ink-jet recording apparatus of the present disclosure is an ink-jet recording apparatus characterized by including: an ink storing section, and an ink discharging mechanism; the ink-jet recording apparatus is configured to discharge an ink stored in the ink storing section by the ink discharging mechanism, further includes a drying mechanism configured to heat and dry a record part by the ink discharged by the ink discharging mechanism; wherein the water-based ink for ink-jet recording of the present disclosure is stored in the ink storing section. Here, the term "record part" means not only a part (area), of the recording medium, to which the ink discharged by the ink recording mechanism is adhered, but also a part (area), of the recording medium, before the ink is adhered thereto, namely, a part (area), of the recording medium, in which an image is to be recorded. In the record part in the former meaning, the ink adhered onto the recording medium is directly heated by the heating mechanism and is dried. In the record part in the latter meaning, since the recording medium is heated first or previously, the ink adhered to the recording medium is consequently heated through the recording medium which has been heated.

The ink-jet recording method of the present disclosure is characterized by including: a recording step of performing recording on a recording medium by discharging a water-based ink onto the recording medium in accordance with an ink-jet system; and a fixing step of fixing, to the recording medium, the water-based ink adhered to the recording medium in the recording step, by use of a drying mechanism configured to heat and dry a record part of the recording medium, wherein the water-based ink for ink-jet recording of the present disclosure is used, as the water-based ink, in the recording step.

In the ink-jet recording method of the present disclosure, the recording medium is exemplified, for example, by the coated paper (coated paper sheet), etc. In the present disclosure, the term "coated paper" means, for example, high quality printing paper, medium quality printing paper, etc., which is plain paper having a pulp as a constituent element thereof and having a coating agent applied thereon for a purpose of improving the smoothness, whiteness, glossiness, etc.; specifically, the coated paper is exemplified by high quality coated paper, medium quality coated paper, etc. Although the water-based ink and the ink-jet recording method of the present disclosure are suitably usable for ink-jet recording on the coated paper, the usage of the water-based ink and the ink-jet recording method is not limited to the recording on the coated paper; it is possible to use the water-based ink and the ink-jet recording method also for ink-jet recording with respect to a recording medium which is different from the coated paper and which includes, for example, plain paper, glossy paper, mat paper, synthetic paper, heat transfer paper, thermosensitive paper, cardboard (paperboard), corrugated cardboard, film, etc.

The ink-jet recording method of the present disclosure can be carried out, for example, by using the ink-jet recording apparatus of the present disclosure. The recording includes printing a letter (text), printing an image, printing, etc.

The figure is a schematic view of the configuration of an example of the ink-jet recording apparatus of the present disclosure. As depicted in the figure, an ink-jet recording apparatus 100 includes a paper feed tray 101, a conveying mechanism such as a roller, etc., (not depicted in the drawing), a recording mechanism, a platen 103, a drying mechanism 104, a paper discharge tray 105 and an ink storing section such as an ink cartridge or an ink tank, etc., (not depicted in the drawing). Further, the ink-jet recording apparatus of the present disclosure may be provided, for example, with a maintenance unit (not depicted in the drawing). The paper feed tray 101 supports a plurality of pieces of a recording medium (coated paper) P which are stacked.

A conveying route (not depicted in the drawing) is formed, by a guide member, in the inside of the ink-jet recording apparatus 100. The recording paper P is conveyed from the paper feed tray 101 toward the paper discharge tray 105 by the conveying mechanism and via the conveying route, as indicated by an arrow in a broken line in the figure.

The recording mechanism includes a carriage 102A and an ink-jet head (ink discharging mechanism) 102B. The carriage 102A is supported by two guide rails (not depicted in the drawing) which are provided to extend perpendicularly to a conveying direction in which the recording paper P is conveyed. The two guide rails are supported by a casing (not depicted in the drawing) of the ink-jet recording apparatus 100. The carriage 102A is connected to a publicly known belt mechanism (not depicted in the drawing) provided on the two guide rails. The belt mechanism is driven by a carriage motor (not depicted in the drawing). The carriage 102A connected to the belt mechanism moves reciprocally in a direction perpendicular to the conveying direction of the recording paper P, by driving of the carriage motor.

Further, four ink tubes (not depicted in the drawing) connecting the ink storing section and the ink-jet head 102B and a flexible flat cable (not depicted in the drawing) electrically connecting the ink-jet head 102B and a control substrate (not depicted in the drawing) are provided to extend from the carriage 102A. The four ink tubes supply four color water-based inks which are yellow, magenta, cyan and black inks and which are stored in the ink storing section to the ink-jet head 102B. At least one of the four color water-based inks is the water-based ink for ink-jet recording of the present disclosure. The flexible flat cable transmits a control signal outputted form the control substrate to the ink-jet head 102B.

As depicted in the figure, the ink-jet head 102B is mounted on the carriage 102A. A plurality of nozzles 102C are formed in a lower surface of the ink-jet head 102B. Forward ends of the plurality of nozzles 102C are exposed from the carriage 102A and the lower surface of the ink-jet head 102B. The ink-jet head 102B has an actuator (not depicted in the drawing) configured to apply a force for discharging or ejecting the water-based ink(s) supplied from the ink storing section to the ink-jet head 102B via the ink tube(s). The actuator may be of any system including the piezoelectric element system, the thermal ink system, the electrostatic attraction system, etc. In a process in which the carriage 102A moves reciprocally in the direction perpendicular to the conveying direction of the recording paper P, the ink-jet head 102B discharges or ejects the water-based ink(s) as fine ink droplets from the plurality of nozzles 102C onto the recording paper P. With this, an image is recorded on the recording paper P. The platen 103 is arranged to face or to be opposite to the recording mechanism, and supports the recording paper P which is (being) conveyed from the paper feed tray 101. Note that although an ink-jet head of a serial type is adopted in the apparatus depicted in the figure, the present disclosure is not limited to this. It is allowable that the ink-jet recording apparatus is an apparatus adopting an ink-jet head of a line type or an roll to roll system.

The drying mechanism 104 heats and dries the record part of the recording paper P. The temperature on the recording paper P at the time of drying may be, for example, a temperature in a range of 0.1 times to 10 times, in a range of 0.2 times to 8 times, or in a range of 0.5 times to 5 times the Tg of the acrylic-based resin particles. The temperature can be appropriately adjusted by changing the setting of the drying mechanism 104; specifically, the temperature is, for example, in a range of 0°C to 400°C, in a range of 5°C to 350°C or in a range of 10°C to 250°C. Further, the time of the drying (drying time) can also be appropriately adjusted by changing the setting of the drying mechanism 104; the drying time, for example, exceeds 0 seconds and is not more than 300 seconds, is in a range of 0.05 second to 60 seconds, or is in a range of 0.07 second to 30 seconds. The water-based ink of the present disclosure is fixable to the coated paper by a drying at a lower temperature and for a shorter period of time, as compared with a conventional water-based ink which requires heating and drying at a high temperature and for a long period of time. The drying mechanism 104 may be any mechanism provided that the mechanism is capable of heating and drying the record part. Further, the heating system by the drying mechanism 104 is not particularly limited, and may be any system including, for example, the heat transfer, convection, radiation, etc. The drying mechanism 104 is exemplified, for example, by commercially available dryer (warm air), oven, belt conveyor oven, iron, hot press, plate heater, IR heater, etc.; the drying mechanism 104 is preferably a non-contact type drying mechanism which is configured to heat and dry the record part of the recording paper P, without making contact with the record part, such as the dryer, oven, belt-conveyor oven, etc.

In the apparatus depicted in the figure, an example in which the record part of the recording paper P is heated and dried by the drying mechanism 104 arranged on the side of the ink-jet head 102B so as to face the record part of the recording paper P. The present disclosure, however, is not limited to this. The drying mechanism 104 may be a mechanism capable of heating and drying the record part of the recording paper P, and may be arranged on a side opposite to the record part of the recording paper P, namely, on a side facing the nozzles 102C of the ink-jet head 102B. In the apparatus depicted in the figure, although the drying mechanism 104 is arranged on the downstream side in the conveying direction with respect to the ink-jet head 102B, it is allowable to arrange the heating mechanism 104 on the upstream side in the conveying direction with respect to the recording head 102B so as to heat the record part before the ink lands on the record part.

The recording paper P after the recording and drying have been performed therefor is conveyed to the paper discharge tray 105. According to the present disclosure, it is possible to improve the fixing property of the ink to the recording paper P, without requiring any complex configuration.

Next, the maintenance unit will be explained. The maintenance unit is provided with a waste liquid foam (not depicted in the drawing), a cap (not depicted in the drawing), a tube (not depicted in the drawing) and a pump (not depicted in the drawing) which are arranged on one side in the scanning direction with respect to the platen 103. Further, a wipe member (not depicted in the drawing) is arranged to be adjacent to the maintenance unit, on a location of the maintenance unit on the side of the platen 103. The wipe member is formed to have a spatula shape, and configured to wipe forward end parts of the nozzles 102C of the ink-jet head 102B (also referred to as a nozzle surface or an ink discharge surface), accompanying with the movement of the carriage 102A.

EXAMPLES

Next, Examples of the present disclosure will be explained together with Comparative Examples. Note that the present disclosure is not limited to or restricted by Examples and Comparative Examples described below.

(Preparation of Aqueous Pigment Dispersion A)

Pure water (purified water) was added to 20% by mass of a pigment (carbon black) and 7% by mass of sodium hydroxide-neutralized product of styrene-acrylic acid copolymer (acid value: 175 mgKOH/g, molecular weight: 10000) so that the entire amount thereof was 100% by mass, followed by being agitated and mixed, and thus a mixture was obtained. The obtained mixture was placed in a wet sand mill charged with zirconia beads of which diameter was 0.3 mm, and was subjected to a dispersing process for 6 (six) hours. Afterwards, the zirconia beads were removed by a separator, and the mixture was filtrated through a cellulose acetate filter (pore size 3.0 $\mu$m). Thus, aqueous pigment dispersion (water pigment dispersion) A was obtained. Note that the styrene-acrylic acid copolymer is a water-soluble polymer which is generally used as a dispersant for pigment (pigment dispersant).

(Examples 1 to 14 and Comparative Examples 1 to 7)

Components, which were included in Water-based Ink Composition (TABLE 1) and which were different from the aqueous pigment dispersion A were mixed uniformly or homogeneously; and thus an ink solvent was obtained. Subsequently, the obtained ink solvent was added to the aqueous pigment dispersion A, followed by being mixed uniformly, and thus a mixture was obtained. After that, the obtained mixture was filtrated through a cellulose acetate membrane filter (pore size 3.00 $\mu$m) produced by TOYO ROSHI KAISHA, LTD., and thus a water-based ink for ink jet recording of each of Examples 1 to 14 and Comparative Examples 1 to 7 indicated in TABLE 1 was obtained.

(Measurement of Static Surface Tension)

Regarding the water-based ink of each of Examples 1 to 14 and Comparative Examples 1 to 7, the static surface tension was measured by using the "CBVP-Z" (trade name) (surface tensiometer) manufactured by KYOWA INTERFACE SCIENCE CO., LTD., under a condition of measurement temperature of 25°C, and a measured value was read. The obtained result of measurement is indicated in TABLE 1.

With respect to the water-based inks of Examples 1 to 14 and Comparative Examples 1 to 7, respectively, (a) Evaluation of the fixing property to coated paper, (b) Evaluation of image quality: a white streak-like (while line-like) uneven part (banding), and (c) Maintainability (ink removing property) were performed by the following methods.

(a) Evaluation of the fixing property to coated paper

An ink-jet printer MFC-J6995CDW (trade name) produced by BROTHER INDUSTRIES., LTD., was used so as to form an image of a single color patch on coated paper ("OK TOP COAT + (trade name)" produced by OJI PAPER CO., LTD.), by using each of the water-based inks of Examples and Comparative Examples, thereby producing an evaluation sample. Then, the evaluation sample was dried under a condition of 100°C and 60 seconds. Then, a surface of the evaluation sample was rubbed one time by using a cotton swab from a record part of the water-based ink toward a non-record part (blank part, blank sheet part) (hereinafter referred to as a "rubfastness test"). Afterwards, the extent (state) of peeling off in the record part was confirmed by a visual inspection, and the evaluation was performed therefor in accordance with the following criterion for evaluation.

<Criterion for evaluation of fixing property to coated paper>

A: There was no change in the record part before and after the rubfastness test (there was no peeling off).

B: There was a peeling off in a part of the record part before and after the rubfastness test.

C: There was a peeling off in approximately half of the record part before and after the rubfastness test.

D: There was a peeling off in the entirety of the record part before and after the rubfastness test.

(b) Evaluation of image quality: white streak-like uneven part (banding)

The ink-jet printer MFC-J6995CDW (trade name) produced by BROTHER INDUSTRIES., LTD., was used so as to record an image including a black single color patch on plain paper ("4200" produced by XEROX CORPORATION), at a resolution of 600 dpi x 300 dpi, by using each of the water-based inks of Examples and Comparative Examples, thereby producing an evaluation sample. Then, the evaluation regarding the white streak-like uneven part (banding) was confirmed by a visual inspection of the evaluation sample, and the evaluation was performed therefor in accordance with the following criterion for evaluation.

<Criterion for evaluation of white streak-like uneven part (banding)>

A: No white streak-line uneven part (banding) was confirmed.
B: A white point was confirmed in a part of the evaluation sample.
C: A white streak-like uneven part (banding) was confirmed in a part of the evaluation sample.
D: A white streak-like uneven part (banding) was confirmed in the entirety of the evaluation sample.

(c) Evaluation of maintainability (ink removing property)

3 μL of the water-based ink of each of Examples and Comparative Examples was dripped to the forward end parts of nozzles of an ink-jet head (nozzle surface), followed by being stored for 24 hours in an environment of temperature: 40°C and humidity: 30%. In the following, a position at which the water-based ink was dripped is referred also to as a "dripping position". After the storage, the ink-jet head was attached to the ink-jet printer MFC-J6995CDW produced by BROTHER INDUSTRIES., LTD., and maintenance by wiping was performed at the room temperature (20°C). After the maintenance, the forward end parts of the nozzles were confirmed by a visual inspection, and the evaluation was performed therefor in accordance with the following criterion for evaluation.

<Criterion for evaluation of maintainability (ink removing property)>

A: There was no residue of the water-based ink in the forward end parts of the nozzles (the water-based ink was removed).
B: Although the water-based ink was moved from the dripping position, there was a residue of the water-based ink in the forward end parts of the nozzles.
C: There was a trace of the water-based ink dragged or stretched from the dripping position.
D: The water-based ink was not moved from the dripping position.

The water-based ink composition and the results of evaluations of each of the water-based inks of Examples 1 to 14 and Comparative Examples 1 to 7 are indicated in TABLE 1.

## TABLE 1 (following) - LEGEND

*1: Aqueous dispersion of carbon black (containing a resin dispersant); numeral in the table indicates the pigment solid component amount.

*2: "MOWINYL" is a registered trade mark of JAPAN COATING RESIN CO., LTD.; acrylic-based resin particles; average particle diameter: 136 nm; manufactured by JAPAN COATING RESIN CO., LTD.; active ingredient: 46%; numeral in the table indicates the blending amount.

*3: "MOWINYL" is a registered trade mark of JAPAN COATING RESIN CO., LTD.; acrylic-based resin particles; average particle diameter: 134 nm; manufactured by JAPAN COATING RESIN CO., LTD.; active ingredient: 46%; numeral in the table indicates the blending amount.

*4: "SILFACE" is a registered trade mark of NISSHIN KOGAKU KOGYO KK; a silicone-based surfactant; manufactured by NISSHIN KAGAKU KOGYO KK; numeral in the table indicates the blending amount.

*5: "SILFACE" is a registered trade mark of NISSHIN KOGAKU KOGYO KK; a silicone-based surfactant; manufactured by NISSHIN KAGAKU KOGYO KK; numeral in the table indicates the blending amount.

\*6: "SILFACE" is a registered trade mark of NISSHIN KOGAKU KOGYO KK; a silicone-based surfactant; manufactured by NISSHIN KAGAKU KOGYO KK; numeral in the table indicates the blending amount.

\*7: "SUPERFLEX" is a registered trade mark of DAI-ICHI KOGYO SEIYAKU CO., LTD.; urethane-based resin particles; average particle diameter: 56 nm; manufactured by DAI-ICHI KOGYO SEIYAKU CO., LTD.; active ingredient: 30%; numeral in the table indicates the blending amount.

\*8: "MOWINYL" is a registered trade mark of JAPAN COATING RESIN CO., LTD.; acrylic-based resin particles; average particle diameter: 126 nm; manufactured by JAPAN COATING RESIN CO., LTD.; active ingredient: 46%; numeral in the table indicates the blending amount.

\*9: "MOWINYL" is a registered trade mark of JAPAN COATING RESIN CO., LTD.; acrylic-based resin particles; average particle diameter: 149 nm; manufactured by JAPAN COATING RESIN CO., LTD.; active ingredient: 42%; numeral in the table indicates the blending amount.

\*10: "OLFINE is a registered trade mark of NISSHIN KAGAKU KOGYO KK; an acetylene glycol-based surfactant; manufactured by NISSHIN KAGAKU KOGYO KK; numeral in the table indicates the blending amount.

TABLE 1

| | | | Tg (°C) / HLB value | EXAMPLES | | | | | | |
|---|---|---|---|---|---|---|---|---|---|---|
| | | | | 1 * | 2 * | 3 * | 4 * | 5 | 6 | 7 |
| Water-based Ink Composition (% by weight) | Colorant (P) | Aqueous pigment dispersion A (*1) | | 5.0 | 5.0 | 5.0 | 5.0 | 5.0 | 5.0 | 5.0 |
| | Resin particles (R) | | Tg (°C) | | | | | | | |
| | | MOWINYL 6899D (*2) | 49 | 10.0 | 10.0 | 10.0 | 10.0 | 10.0 | 10.0 | 10.0 |
| | | MOWINYL DM774 (*3) | 30 | - | - | - | - | - | - | - |
| | | SUPERFLEX 820 (*7) | 46 | - | - | - | - | - | - | - |
| | | MOWINYL DM772 (*8) | 22 | - | - | - | - | - | - | - |
| | | MOWINYL 6969D (*9) | 71 | - | - | - | - | - | - | - |
| | Humectant (B) | trimethylglycine | | 1.0 | 5.0 | 5.0 | 5.0 | 5.0 | 5.0 | 5.0 |
| | | 3-amino propanoic acid | | - | - | - | - | - | - | - |
| | | glycerol | | - | - | - | - | - | - | - |
| | | propylene glycol | | - | - | - | - | - | - | - |
| | Penetrant | 1,2-hexanediol | | 5.0 | 5.0 | 5.0 | 5.0 | 5.0 | 5.0 | 5.0 |
| | | dipropylene glycol monopropyl ether | | 2.5 | 2.5 | 2.5 | 2.5 | 2.5 | 2.5 | 2.5 |
| | Surfactant | | HLB value | | | | | | | |
| | | SILFACE SAG002 (*4) | 12 | 2.5 | - | - | 3.5 | 3.0 | 2.5 | 2.0 |
| | | SILFACE SAG005 (*5) | 7 | - | 2.5 | - | - | - | - | - |
| | | SILFACE SAG503A (*6) | 11 | - | - | 2.5 | - | - | - | - |
| | | OLFIN E1010 (*10) | 13.5 | - | - | - | - | - | - | - |
| | Water | | | balance | balance | balance | balance | balance | balance | balance |
| Ratio | R/B | | | 4.6 | 0.9 | 0.9 | 0.9 | 0.9 | 0.9 | 0.9 |
| | (P+R) / B | | | 9.6 | 1.9 | 1.9 | 1.9 | 1.9 | 1.9 | 1.9 |
| Static surface tension (mN/m) | | | | 25 | 21 | 26 | 24 | 24 | 25 | 25 |
| Fixing property to coated paper | | | | A | A | A | A | A | A | A |
| White streak-like uneven part (banding) | | | | A | C | C | A | A | A | A |
| Maintainability (Ink removing property) | | | | C | A | A | B | A | A | A |

* outside scope of invention

EP 4 067 446 B1

13

TABLE 1 (continued)

| | | | | EXAMPLES | | | | | | |
|---|---|---|---|---|---|---|---|---|---|---|
| | | | | 8 * | 9 * | 10 * | 11 * | 12 | 13 | 14 * |
| Water-based Ink Composition (% by weight) | Colorant (P) | Aqueous pigment dispersion A (*1) | | 5.0 | 5.0 | 5.0 | 5.0 | 5.0 | 5.0 | 5.0 |
| | | | Tg (°C) | | | | | | | |
| | Resin particles (R) | MOWINYL 6899D (*2) | 49 | 10.0 | - | 10.0 | 10.0 | 10.0 | 10.0 | 10.0 |
| | | MOWINYL DM774 (*3) | 30 | - | 10.0 | - | - | - | - | - |
| | | SUPERFLEX 820 (*7) | 46 | - | - | - | - | - | - | - |
| | | MOWINYL DM772 (*8) | 22 | - | - | - | - | - | - | - |
| | | MOWINYL 6969D (*9) | 71 | - | - | - | - | - | - | - |
| | Humectant (B) | trimethylglycine | | 5.0 | 5.0 | 10.0 | 9.0 | 8.0 | 3.0 | 2.0 |
| | | 3-amino propanoic acid | | - | - | - | - | - | - | - |
| | | glycerol | | - | - | - | - | - | - | - |
| | | propylene glycol | | - | - | - | - | - | - | - |
| | Penetrant | 1,2-hexanediol | | 5.0 | 5.0 | 5.0 | 5.0 | 5.0 | 5.0 | 5.0 |
| | | dipropylene glycol monopropyl ether | | 2.5 | 2.5 | 2.5 | 2.5 | 2.5 | 2.5 | 2.5 |
| | Surfactant | | HLB value | | | | | | | |
| | | SILFACE SAG002 (*4) | 12 | 1.5 | 2.5 | 2.5 | 2.5 | 2.5 | 2.5 | 2.5 |
| | | SILFACE SAG005 (*5) | 7 | - | - | - | - | - | - | - |
| | | SILFACE SAG503A (*6) | 11 | - | - | - | - | - | - | - |
| | | OLFIN E1010 (*10) | 13.5 | - | - | - | - | - | - | - |
| | Water | | | balance | balance | balance | balance | balance | balance | balance |
| Ratio | R/B | | | 0.9 | 0.9 | 0.5 | 0.5 | 0.6 | 1.5 | 2.3 |
| | (P+R) / B | | | 1.9 | 1.9 | 1.0 | 1.1 | 1.2 | 3.2 | 4.8 |
| Static surface tension (mN/m) | | | | 26 | 25 | 25 | 25 | 25 | 25 | 25 |
| Fixing property to coated paper | | | | A | C | C | B | A | A | A |
| White streak-like uneven part (banding) | | | | B | A | A | A | A | A | A |
| Maintainability (Ink removing property) | | | | A | B | A | A | A | A | B |

* outside scope of the invention

TABLE 1 (continued)

| | | | COMPARATIVE EXAMPLES | | | | | | |
|---|---|---|---|---|---|---|---|---|---|
| | | | 1 | 2 | 3 | 4 | 5 | 6 | 7 |
| Water-based Ink Composition (% by weight) | Colorant (P) | Aqueous pigment dispersion A (*1) | 5.0 | 5.0 | 5.0 | 5.0 | 5.0 | 5.0 | 5.0 |
| | Resin particles (R) | | Tg (°C) | | | | | | |
| | | MOWINYL 6899D (*2) | 49 | - | - | - | 10.0 | 10.0 | 10.0 | 10.0 |
| | | MOWINYL DM774 (*3) | 30 | - | - | - | - | - | - | - |
| | | SUPERFLEX 820 (*7) | 46 | 15.3 | - | - | - | - | - | - |
| | | MOWINYL DM772 (*8) | 22 | - | 10.0 | - | - | - | - | - |
| | | MOWINYL 6969D (*9) | 71 | - | - | 11.0 | - | - | - | - |
| | Humectant (B) | trimethylglycine | | 5.0 | 5.0 | 5.0 | - | - | - | 5.0 |
| | | 3-amino propanoic acid | | - | - | - | 5.0 | - | - | - |
| | | glycerol | | - | - | - | - | 5.0 | - | - |
| | | propylene glycol | | - | - | - | - | - | 5.0 | - |
| | Penetrant | 1,2-hexanediol | | 5.0 | 5.0 | 5.0 | 5.0 | 5.0 | 5.0 | 5.0 |
| | | dipropylene glycol monopropyl ether | | 2.5 | 2.5 | 2.5 | 2.5 | 2.5 | 2.5 | 2.5 |
| | Surfactant | | HLB value | | | | | | |
| | | SILFACE SAG002 (*4) | 12 | 2.5 | 2.5 | 2.5 | 2.5 | 2.5 | 2.5 | - |
| | | SILFACE SAG005 (*5) | 7 | - | - | - | - | - | - | - |
| | | SILFACE SAG503A (*6) | 11 | - | - | - | - | - | - | - |
| | | OLFIN E1010 (*10) | 13.5 | - | - | - | - | - | - | 2.5 |
| | Water | | | balance | balance | balance | balance | balance | balance | balance |
| Ratio | R/B | | | 0.9 | 0.9 | 0.9 | 0.9 | 0.9 | 0.9 | 0.9 |
| | (P+R) / B | | | 1.9 | 1.9 | 1.9 | 19 | 1.9 | 1.9 | 1.9 |
| Static surface tension (mN/m) | | | | 25 | 25 | 25 | 25 | 25 | 25 | 28 |
| Fixing property to coated paper | | | | D | D | D | B | D | A | A |
| White streak-like uneven part (banding) | | | | A | A | A | A | A | A | D |
| Maintainability (Ink removing property) | | | | D | D | A | D | C | D | A |

EP 4 067 446 B1

As indicated in TABLE 1, the results of the evaluations of the fixing property, the image quality (white streak-like uneven part (banding) and the maintainability (ink removing property) were all higher than "D", and satisfactory in each of Examples 1 to 14. Further, regarding Examples 6 and 9 of which conditions were similar to each other except for the difference in the Tg of the acrylic-based resin particles, Example 6 which used the acrylic-based resin particles of which Tg was not less than 31°C was further excellent in the fixing property to the coated paper than Example 9 which used the acrylic-based resin particles of which Tg was 30°C. Further, among Examples 1 to 8 and 10 to 14 which used the acrylic-based resin particles of which Tg was not less than 31°C, regarding Examples 1, 6 and 10 to 14 of which conditions were similar to one another except for the blending amount of the trimethylglycine, Examples 6 and 11 to 14 in which the blending amount of the trimethylglycine was in a range of 2% by weight to 9% by weight, the results of the evaluations of the fixing property and the maintainability (ink removing property) were "B" or higher, and were more satisfactory than those in Examples 1 and 10 in which the blending amount of the trimethylglycine was outside the range of 2% by weight to 9% by weight. Furthermore, regarding similarly Examples 1, 6 and 10 to 14, Examples 6, 12 and 13 in which the blending amount of the trimethylglycine was in a range of 3% by weight to 8% by weight had the results of the evaluations of the fixing property and the maintainability (ink removing property) were all "A" and were more satisfactory than those in Examples 1, 10, 11 and 14 in which the blending amount of the trimethylglycine was outside the range of 3% by weight to 8% by weight.

Moreover, as indicated in TABLE 1, regarding Examples 1 to 3, 6 and 10 to 14 of which compositions were similar to one another except for the difference in the HLB value, Examples 1, 6 and 9 to 14 using the silicone-based surfactant of which HLB value of the silicone-based surfactant was not less than 12 all had the result of the evaluation of the image quality (white streak-like uneven part (banding)) of "A" and were more satisfactory than those in Examples 2 and 3 using the silicone-based surfactant of which HLB value was less than 12. Further, regarding Examples 4 to 8 of which compositions were similar to one another except for the difference in the blending amount of the silicone-based surfactant, Examples 5 to 7 in which the blending amount of the silicone-based surfactant was within a range of 2% by weight to 3% by weight, the results of the evaluations of the image quality (white streak-like uneven part (banding)) and the maintainability (ink removing property) were all A and were more satisfactory than those in Examples 4 and 8 in which the blending amount of the silicone-based surfactant was outside the range of 2% by weight to 3% by weight.

Further, as indicated in TABLE 1, regarding Examples 1, 5 to 7 and 10 to 14 in which the Tg of the acrylic-based resin particles was not less than 31°C, the HLB value of the silicone-based surfactant was not less than 12 and the blending amount of the silicone-based surfactant was within the range of 2% by weight to 3% by weight, Examples 5 to 7, 12 and 13 in which the ratio R/B was within a range of R/B = 0.6 to 1.5 had the results of the evaluations of the fixing property, the image quality (white streak-like uneven part (banding)) and the maintainability (ink removing property) which were all "A" and were more satisfactory than those in Examples 1, 10, 11 and 14 in which the ratio R/B was outside the range of R/B = 0.6 to 1.5. Further, regarding similarly Examples 1, 5 to 7 and 10 to 14, Examples 5 to 7, 12 and 13 in which the ratio (P+R)/B was within a range of (P+R)/B = 1.2 to 3.2 had the results of the evaluations of the fixing property, the image quality (white streak-like uneven part (banding)) and the maintainability (ink removing property) which were all "A" and were more satisfactory than those in Examples 1, 10, 11 and 14 in which the ratio (P+R)/B was outside the range of (P+R)/B = 1.2 to 3.2.

On the other hand, as indicated in TABLE 1, in Comparative Examples 1 to 7, the result of evaluation of at least one of the fixing property, the image quality (white streak-like uneven part (banding)) and the maintainability (ink removing property) was "D". In Comparative Example 1 which used urethane-based resin particles, rather than using the acrylic-based resin particles, the results of evaluations of both of the fixing property and the maintainability (ink removing property) were unsatisfactory. Further, in Comparative Example 2 which used the acrylic-based resin particles of which Tg was less than 25°C, the results of evaluations of both of the fixing property and the maintainability (ink removing property) were unsatisfactory. Furthermore, in Comparative Example 3 which used the acrylic-based resin particles of which Tg was not less than 50°C, the result of evaluation of the fixing property was unsatisfactory. Moreover, in Comparative Example 4 which used 3-amino propanoic acid, rather than using the trimethylglycine, the result of evaluation of the maintainability (ink removing property) was unsatisfactory. Further, in Comparative Example 5 which used glycol, rather than using the trimethylglycine, the result of evaluation of the fixing property was unsatisfactory. Furthermore, in Comparative Example 6 which used propylene glycerol, rather than using the trimethylglycine, the result of evaluation of the maintainability (ink removing property) was unsatisfactory. Moreover, in Comparative Example 7 of which static surface tension was 28 Nm/m, the result of evaluation of the image quality (white streak-like uneven part (banding) was unsatisfactory.

In all of the inks of Examples, the blending amount (S) of the substance which is the solid matter (the colorant + the resin particles + the trimethylglycine) was greater than the blending amount (L) of the liquid (excluding the water), and was smaller than the blending amount (W) of the water (satisfying the condition (Z)). For example, in Examples 2 to 9: S = 14.6% by weight, L = in a range of 9% by weight to 11% by weight, and W = the balance. In contrast, in Comparative Examples 5 and 6: S = 9.6% by weight, L = 15% by weight, and W = the balance, and thus "L" was greater than "S". Although the ink of Comparative Example 4 satisfied the condition (Z) since the humectant used in Comparative Example 4 was 3-aminopropane which is solid at the room temperature, the ink of Comparative Example 4 was inferior in the maintainability since the trimethylglycine was not used therein, as described above.

As the evaluation of the fixing property of the ink of each of Examples and Comparative Examples, the drying of the ink was performed under the condition of 100°C and 60 seconds. It is considered, however, that even in a case that the drying was performed at a temperature and a period of time which are lower and shorter, respectively, than those in the above-described condition, namely, in a case that the cumulative amount of heat applied to the ink becomes to be low, the evaluation(s) of the superiority and inferiority regarding the evaporation rate and/or the fixing property of the ink of each of Examples and Comparative Examples do not change. Accordingly, it is considered that the ink of each of Examples is excellent in the fixing property with respect to the coated paper, even with a drying at a lower temperature and for a shorter period of time.

As described above, the water-based ink of the present disclosure has excellent fixing property, image quality and maintainability, and is fixable also to the coated paper by the drying at a low temperature and for a short period of time.

## Claims

1. Use of a water-based ink for ink-jet recording for recording on a coated paper by discharging the water-based ink onto the coated paper,

   wherein the water-based ink for ink-jet recording comprises a pigment, acrylic-based resin particles, a surfactant, trimethylglycine, and water;
   wherein a glass transition temperature of the acrylic-based resin particles is less than 50°C;
   a static surface tension of the water-based ink for ink-jet recording is not more than 27 mN/m;
   the glass transition temperature of the acrylic-based resin particles is not less than 31°C;
   the surfactant is a silicone-based surfactant;
   a HLB value of the surfactant is not less than 12;
   wherein a blending amount of the surfactant is in a range of 2% by weight to 3% by weight;
   a solid content blending amount of the acrylic-based resin particles and a blending amount of the trimethylglycine satisfy the following condition (X):

$$\text{Condition (X): } 0.6 \leq R/B \leq 1.5,$$

   R: the solid content blending amount (% by weight) of the acrylic-based resin particles, and
   B: the blending amount (% by weight) of the trimethylglycine; and
   a solid content blending amount of the pigment, a solid content blending amount of the acrylic-based resin particles and a blending amount of the trimethylglycine satisfy the following condition (Y):

$$\text{Condition (Y): } 1.2 \leq (P+R)/B \leq 3.2,$$

   P: the solid content blending amount (% by weight) of the pigment,
   R: the solid content blending amount (% by weight) of the acrylic-based resin particles, and
   B: the blending amount (% by weight) of the trimethylglycine.

2. An ink-jet recording apparatus **characterized by** comprising an ink storing section and an ink discharging mechanism,

   the ink-jet recording apparatus further comprising a feed tray (100) supporting a plurality of pieces of coated paper (P) which are stacked;
   the ink-jet recording apparatus being configured to discharge an ink stored in the ink storing section by the ink discharging mechanism onto a piece of coated paper (P);
   the ink-jet recording apparatus further comprising a drying mechanism configured to heat and dry a record part of the piece of coated paper (P) by the ink discharged by the ink discharging mechanism,
   wherein a water-based ink for ink-jet recording is stored in the ink storing section,
   wherein the water-based ink for ink-recording comprises a pigment, acrylic-based resin particles, a surfactant, trimethylglycine, and water;
   wherein a glass transition temperature of the acrylic-based resin particles is less than 50°C;
   a static surface tension of the water-based ink for ink-jet recording is not more than 27 mN/m;
   the glass transition temperature of the acrylic-based resin particles is not less than 31°C;
   the surfactant is a silicone-based surfactant;
   a HLB value of the surfactant is not less than 12;

wherein a blending amount of the surfactant is in a range of 2% by weight to 3% by weight;
a solid content blending amount of the acrylic-based resin particles and a blending amount of the trimethylglycine satisfy the following condition (X):

$$\text{Condition (X): } 0.6 \leq R/B \leq 1.5,$$

R: the solid content blending amount (% by weight) of the acrylic-based resin particles, and
B: the blending amount (% by weight) of the trimethylglycine; and
a solid content blending amount of the pigment, a solid content blending amount of the acrylic-based resin particles and a blending amount of the trimethylglycine satisfy the following condition (Y):

$$\text{Condition (Y): } 1.2 \leq (P+R)/B \leq 3.2,$$

P: the solid content blending amount (% by weight) of the pigment,
R: the solid content blending amount (% by weight) of the acrylic-based resin particles, and
B: the blending amount (% by weight) of the trimethylglycine.

3. An ink-jet recording method **characterized by** comprising:

a recording step of performing recording on a coated paper (P) by discharging a water-based ink onto the coated paper (P) in accordance with an ink-jet system; and
a fixing step of fixing, to the coated paper (P), the water-based ink adhered to the coated paper (P) in the recording step, by use of a drying mechanism configured to heat a record part of the coated paper (P),
wherein the water-based ink for ink-jet recording used in the recording step comprises a pigment, acrylic-based resin particles, a surfactant, trimethylglycine, and water;
wherein a glass transition temperature of the acrylic-based resin particles is less than 50°C;
a static surface tension of the water-based ink for ink-jet recording is not more than 27 mN/m;
the glass transition temperature of the acrylic-based resin particles is not less than 31°C;
the surfactant is a silicone-based surfactant;
a HLB value of the surfactant is not less than 12;
wherein a blending amount of the surfactant is in a range of 2% by weight to 3% by weight;
a solid content blending amount of the acrylic-based resin particles and a blending amount of the trimethylglycine satisfy the following condition (X):

$$\text{Condition (X): } 0.6 \leq R/B \leq 1.5,$$

R: the solid content blending amount (% by weight) of the acrylic-based resin particles, and
B: the blending amount (% by weight) of the trimethylglycine; and
a solid content blending amount of the pigment, a solid content blending amount of the acrylic-based resin particles and a blending amount of the trimethylglycine satisfy the following condition (Y):

$$\text{Condition (Y): } 1.2 \leq (P+R)/B \leq 3.2,$$

P: the solid content blending amount (% by weight) of the pigment,
R: the solid content blending amount (% by weight) of the acrylic-based resin particles, and
B: the blending amount (% by weight) of the trimethylglycine.

4. The use, ink-jet recording apparatus or ink-jet recording method according to claim 1, 2 or 3, wherein a blending amount of the trimethylglycine is in a range of 2% by weight to 9% by weight.

5. The use, ink-jet recording apparatus or ink-jet recording method according to claim 4, wherein the blending amount of the trimethylglycine is in a range of 3% by weight to 8% by weight.

6. The use, ink-jet recording apparatus or ink-jet recording method according to any one of claims 1 to 5, wherein a blending amount of the water is not less than 70% by weight.

7. The use, ink-jet recording apparatus or ink-jet recording method according to claim 6, wherein a blending amount of a substance which includes the pigment and the acrylic-based resin particles and of which simple substance is solid at a normal temperature, a blending amount of a substance which is different from the water and which is liquid at the normal temperature, and the blending amount of the water satisfy the following condition (Z),

$$\text{Condition (Z): } L < S < W,$$

S: the blending amount (% by weight) of the substance of which simple substance is solid at the normal temperature,
L: the blending amount (% by weight) of the substance which is liquid at the normal temperature, and
W: the blending amount (% by weight) of the water.

**Patentansprüche**

1. Verwendung einer wasserbasierten Tinte für die Tintenstrahlaufzeichnung zum Aufzeichnen auf einem beschichteten Papier durch Ausstoßen der wasserbasierten Tinte auf das beschichtete Papier,

wobei die wasserbasierte Tinte für die Tintenstrahlaufzeichnung ein Pigment, Acrylharzpartikel, ein Tensid, Trimethylglycin und Wasser umfasst;
wobei eine Glasübergangstemperatur der Acrylharzpartikel weniger als 50 °C beträgt;
eine statische Oberflächenspannung der wasserbasierten Tinte für die Tintenstrahlaufzeichnung nicht mehr als 27 mN/m beträgt;
die Glasübergangstemperatur der Acrylharzpartikel nicht weniger als 31 °C beträgt;
das Tensid ein Tensid auf Silikonbasis ist;
ein HLB-Wert des Tensids nicht weniger als 12 beträgt;
wobei die Beimischungsmenge des Tensids in einem Bereich von 2 Gew.-% bis 3 Gew.-% liegt;
eine Feststoffgehalt-Beimischungsmenge der Acrylharzpartikel, bezogen auf den Feststoffgehalt, und die Beimischungsmenge des Trimethylglycins die folgende Bedingung (X) erfüllen:

$$\text{Bedingung (X): } 0{,}6 \leq R/B \leq 1{,}5,$$

R: die Feststoffgehalt-Beimischungsmenge (Gew.-%) der Acrylharzpartikel und
B: die Beimischungsmenge (Gew.-%) des Trimethylglycins; und
eine Feststoffgehalt-Beimischungsmenge des Pigments, die Feststoffgehalt-Beimischungsmenge der Acrylharzpartikel und die Beimischungsmenge des Trimethylglycins die folgende Bedingung (Y) erfüllen:

$$\text{Bedingung (Y): } 1{,}2 \leq (P+R)/B \leq 3{,}2,$$

P: die Feststoffgehalt-Beimischungsmenge (Gew.-%) des Pigments,
R: die Feststoffgehalt-Beimischungsmenge (Gew.-%) der Acrylharzpartikel und
B: die Beimischungsmenge (Gew.-%) des Trimethylglycins.

2. Tintenstrahlaufzeichnungsvorrichtung, **dadurch gekennzeichnet, dass** sie einen Tintenspeicherabschnitt und einen Tintenausstoßmechanismus umfasst,

wobei die Tintenstrahlaufzeichnungsvorrichtung ferner eine Zuführschale (100) umfasst, die eine Vielzahl von gestapelten beschichteten Papierstücken (P) trägt;
wobei die Tintenstrahlaufzeichnungsvorrichtung so konfiguriert ist, dass sie eine im Tintenspeicherabschnitt gespeicherte Tinte durch den Tintenausstoßmechanismus auf ein beschichtetes Papierstück (P) ausstößt;
wobei die Tintenstrahlaufzeichnungsvorrichtung ferner einen Trocknungsmechanismus umfasst, der so konfiguriert ist, dass er einen Aufzeichnungsteil des Stücks beschichtetes Papier (P) durch die vom Tintenausstoßmechanismus ausgestoßene Tinte erwärmt und trocknet,
wobei eine wasserbasierte Tinte für die Tintenstrahlaufzeichnung in dem Tintenvorratsabschnitt gespeichert ist,
wobei die wasserbasierte Tinte für die Tintenaufzeichnung ein Pigment, Acrylharzpartikel, ein Tensid, Trimethylglycin und Wasser umfasst;

wobei eine Glasübergangstemperatur der Acrylharzpartikel weniger als 50 °C beträgt;

eine statische Oberflächenspannung der wasserbasierten Tinte für die Tintenstrahlaufzeichnung nicht mehr als 27 mN/m beträgt;

die Glasübergangstemperatur der Acrylharzpartikel nicht weniger als 31 °C beträgt;

das Tensid ein Tensid auf Silikonbasis ist;

ein HLB-Wert des Tensids nicht weniger als 12 beträgt;

wobei die Beimischungsmenge des Tensids in einem Bereich von 2 Gew.-% bis 3 Gew.-% liegt;

eine Feststoffgehalt-Beimischungsmenge der Acrylharzpartikel, bezogen auf den Feststoffgehalt, und die Beimischungsmenge des Trimethylglycins die folgende Bedingung (X) erfüllen:

$$\text{Bedingung (X): } 0{,}6 \leq R/B \leq 1{,}5,$$

R: die Feststoffgehalt-Beimischungsmenge (Gew.-%) der Acrylharzpartikel und

B: die Beimischungsmenge (Gew.-%) des Trimethylglycins; und

eine Feststoffgehalt-Beimischungsmenge des Pigments, die Feststoffgehalt-Beimischungsmenge der Acrylharzpartikel und die Beimischungsmenge des Trimethylglycins die folgende Bedingung (Y) erfüllen:

$$\text{Bedingung (Y): } 1{,}2 \leq (P+R)/B \leq 3{,}2,$$

P: die Feststoffgehalt-Beimischungsmenge (Gew.-%) des Pigments,

R: die Feststoffgehalt-Beimischungsmenge (Gew.-%) der Acrylharzpartikel und

B: die Beimischungsmenge (Gew.-%) des Trimethylglycins.

3. Tintenstrahlaufzeichnungsverfahren, **dadurch gekennzeichnet, dass** es umfasst:

einen Aufzeichnungsschritt, bei dem eine Aufzeichnung auf einem beschichteten Papier (P) durchgeführt wird, indem eine wasserbasierte Tinte gemäß einem Tintenstrahlsystem auf das beschichtete Papier (P) abgegeben wird; und

einen Fixierschritt zum Fixieren, auf dem beschichteten Papier (P), der in dem Aufzeichnungsschritt auf das beschichtete Papier (P) aufgebrachten wasserbasierten Tinte unter Verwendung eines Trocknungsmechanismus, der so konfiguriert ist, dass er einen Aufzeichnungsteil des beschichteten Papiers (P) erwärmt,

wobei die in dem Aufzeichnungsschritt verwendete wasserbasierte Tinte für die Tintenstrahlaufzeichnung ein Pigment, Acrylharzpartikel, ein Tensid, Trimethylglycin und Wasser umfasst;

wobei eine Glasübergangstemperatur der Acrylharzpartikel weniger als 50 °C beträgt;

eine statische Oberflächenspannung der wasserbasierten Tinte für die Tintenstrahlaufzeichnung nicht mehr als 27 mN/m beträgt;

die Glasübergangstemperatur der Acrylharzpartikel nicht weniger als 31 °C beträgt;

das Tensid ein Tensid auf Silikonbasis ist;

ein HLB-Wert des Tensids nicht weniger als 12 beträgt;

wobei die Beimischungsmenge des Tensids in einem Bereich von 2 Gew.-% bis 3 Gew.-% liegt;

eine Feststoffgehalt-Beimischungsmenge der Acrylharzpartikel, bezogen auf den Feststoffgehalt, und die Beimischungsmenge des Trimethylglycins die folgende Bedingung (X) erfüllen:

$$\text{Bedingung (X): } 0{,}6 \leq RIB \leq 1{,}5,$$

R: die Feststoffgehalt-Beimischungsmenge (Gew.-%) der Acrylharzpartikel und

B: die Beimischungsmenge (Gew.-%) des Trimethylglycins; und

eine Feststoffgehalt-Beimischungsmenge des Pigments, die Feststoffgehalt-Beimischungsmenge der Acrylharzpartikel und die Beimischungsmenge des Trimethylglycins die folgende Bedingung (Y) erfüllen:

$$\text{Bedingung (Y): } 1{,}2 \leq (P+R)/B \leq 3{,}2,$$

P: die Feststoffgehalt-Beimischungsmenge (Gew.-%) des Pigments,

R: die Feststoffgehalt-Beimischungsmenge (Gew.-%) der Acrylharzpartikel und

B: die Beimischungsmenge (Gew.-%) des Trimethylglycins.

# EP 4 067 446 B1

4. Verwendung, Tintenstrahlaufzeichnungsvorrichtung oder Tintenstrahlaufzeichnungsverfahren nach Anspruch 1, 2 oder 3, wobei die Beimischungsmenge des Trimethylglycins in einem Bereich von 2 Gew.-% bis 9 Gew.-% liegt.

5. Verwendung, Tintenstrahlaufzeichnungsvorrichtung oder Tintenstrahlaufzeichnungsverfahren nach Anspruch 4, wobei die Beimischungsmenge des Trimethylglycins in einem Bereich von 3 Gew.-% bis 8 Gew.-% liegt.

6. Verwendung, Tintenstrahlaufzeichnungsvorrichtung oder Tintenstrahlaufzeichnungsverfahren nach einem der Ansprüche 1 bis 5, wobei die Beimischungsmenge des Wassers nicht weniger als 70 Gew.-% beträgt.

7. Verwendung, Tintenstrahlaufzeichnungsvorrichtung oder Tintenstrahlaufzeichnungsverfahren nach Anspruch 6, wobei eine Beimischungsmenge einer Substanz, die das Pigment und die Acrylharzpartikel enthält und deren einfache Substanz bei normaler Temperatur fest ist, eine Beimischungsmenge einer Substanz, die sich von Wasser unterscheidet und bei normaler Temperatur flüssig ist, und die Beimischungsmenge des Wassers die folgende Bedingung (Z) erfüllen:

$$\text{Bedingung (Z): } L < S < W,$$

S: die Beimischungsmenge (Gew.-%) der Substanz, deren einfache Substanz bei normaler Temperatur fest ist,
L: die Beimischungsmenge (Gew.-%) der Substanz, die bei normaler Temperatur flüssig ist, und
W: die Beimischungsmenge (Gew.-%) des Wassers.

## Revendications

1. Utilisation d'une encre à base d'eau pour impression à jet d'encre sur un papier couché par éjection de l'encre à base d'eau sur le papier couché,

l'encre à base d'eau pour impression à jet d'encre comprenant un pigment, des particules de résine à base d'acrylique, un tensioactif, de la triméthylglycine et de l'eau,
la température de transition vitreuse des particules de résine à base d'acrylique étant inférieure à 50 °C,
la tension superficielle statique de l'encre à base d'eau pour impression à jet d'encre n'étant pas supérieure à 27 mN/m,
la température de transition vitreuse des particules de résine à base d'acrylique n'étant pas inférieure à 31 °C,
le tensioactif étant un tensioactif à base de silicone,
la valeur HLB du tensioactif n'étant pas inférieure à 12,
la quantité de mélange du tensioactif se situant dans une plage de 2 % en poids à 3 % en poids,
la quantité de mélange des solides des particules de résine à base d'acrylique et la quantité de mélange de la triméthylglycine satisfaisant la condition (X) suivante :

$$\text{Condition (X) : } 0,6 \leq R / B \leq 1,5,$$

R : quantité de mélange des solides (% en poids) des particules de résine à base d'acrylique, et
B : quantité de mélange (% en poids) de la triméthylglycine, et
la quantité de mélange des solides du pigment, la quantité de mélange des solides des particules de résine à base d'acrylique et la quantité de mélange de la triméthylglycine satisfaisant la condition (Y) suivante :

$$\text{Condition (Y) : } 1,2 \leq (P + R) / B \leq 3,2,$$

P : quantité de mélange des solides (% en poids) du pigment,
R : quantité de mélange des solides (% en poids) des particules de résine à base d'acrylique, et
B : quantité de mélange (% en poids) de la triméthylglycine.

2. Appareil d'impression à jet d'encre **caractérisé en ce qu'**il comprend une section de stockage d'encre et un mécanisme d'éjection d'encre,

l'appareil d'impression à jet d'encre comprenant en outre un bac d'alimentation (100) supportant une pluralité de feuilles de papier couché (P) qui sont empilées,

l'appareil d'impression à jet d'encre étant conçu pour éjecter une encre stockée dans la section de stockage d'encre au moyen du mécanisme d'éjection d'encre sur une feuille de papier couché (P),

l'appareil d'impression à jet d'encre comprenant en outre un mécanisme de séchage conçu pour chauffer et faire sécher une partie d'impression de la feuille de papier couché (P) présentant l'encre éjectée par le mécanisme d'éjection d'encre ;

une encre à base d'eau pour impression à jet d'encre étant stockée dans la section de stockage d'encre, l'encre à base d'eau pour impression à jet d'encre comprenant un pigment, des particules de résine à base d'acrylique, un tensioactif, de la triméthylglycine et de l'eau,

la température de transition vitreuse des particules de résine à base d'acrylique étant inférieure à 50 °C,

la tension superficielle statique de l'encre à base d'eau pour enregistrement à jet d'encre n'étant pas supérieure à 27 mN/m,

la température de transition vitreuse des particules de résine à base d'acrylique n'étant pas inférieure à 31 °C,

le tensioactif étant un tensioactif à base de silicone,

la valeur HLB du tensioactif n'étant pas inférieure à 12,

la quantité de mélange du tensioactif se situant dans une plage de 2 % en poids à 3 % en poids,

la quantité de mélange des solides des particules de résine à base d'acrylique et la quantité de mélange de la triméthylglycine satisfaisant la condition (X) suivante :

$$\text{Condition (X) : } 0{,}6 \leq R / B \leq 1{,}5,$$

R : quantité de mélange des solides (% en poids) des particules de résine à base d'acrylique, et

B : quantité de mélange (% en poids) de la triméthylglycine, et

la quantité de mélange des solides du pigment, la quantité de mélange des solides des particules de résine à base d'acrylique et la quantité de mélange de la triméthylglycine satisfaisant la condition (Y) suivante :

$$\text{Condition (Y) : } 1{,}2 \leq (P + R) / B \leq 3{,}2,$$

P : quantité de mélange des solides (% en poids) du pigment,

R : quantité de mélange des solides (% en poids) des particules de résine à base d'acrylique, et

B : quantité de mélange (% en poids) de la triméthylglycine.

3. Procédé d'impression à jet d'encre **caractérisé en ce qu'**il comprend :

une étape d'impression consistant à réaliser une impression sur un papier couché (P) par éjection d'une encre à base d'eau sur le papier couché (P) conformément à un système à jet d'encre, et

une étape de fixation consistant à fixer, sur le papier couché (P), l'encre à base d'eau adhérant au papier couché (P) lors de l'étape d'impression, à l'aide d'un mécanisme de séchage conçu pour chauffer une partie d'impression du papier couché (P),

l'encre à base d'eau pour impression à jet d'encre utilisée dans l'étape d'impression comprenant un pigment, des particules de résine à base d'acrylique, un tensioactif, de la triméthylglycine et de l'eau,

la température de transition vitreuse des particules de résine à base d'acrylique étant inférieure à 50 °C,

la tension superficielle statique de l'encre à base d'eau pour impression à jet d'encre n'étant pas supérieure à 27 mN/m,

la température de transition vitreuse des particules de résine à base d'acrylique n'étant pas inférieure à 31 °C,

le tensioactif étant un tensioactif à base de silicone,

la valeur HLB du tensioactif n'étant pas inférieure à 12,

la quantité de mélange du tensioactif se situant dans une plage de 2 % en poids à 3 % en poids,

la quantité de mélange des solides des particules de résine à base d'acrylique et la quantité de mélange de la triméthylglycine satisfaisant la condition (X) suivante :

$$\text{Condition (X) : } 0{,}6 \leq R / B \leq 1{,}5,$$

R : quantité de mélange des solides (% en poids) des particules de résine à base d'acrylique, et

B : quantité de mélange (% en poids) de la triméthylglycine, et

la quantité de mélange des solides du pigment, la quantité de mélange des solides des particules de résine à base d'acrylique et la quantité de mélange de la triméthylglycine satisfaisant la condition (Y) suivante :

$$\text{Condition (Y) : } 1{,}2 \le (P + R) / B \le 3{,}2,$$

P : quantité de mélange des solides (% en poids) du pigment,
R : quantité de mélange des solides (% en poids) des particules de résine à base d'acrylique, et
B : quantité de mélange (% en poids) de la triméthylglycine.

4. Utilisation, appareil d'impression à jet d'encre ou procédé d'impression à jet d'encre selon la revendication 1, 2 ou 3, dans lesquels la quantité de mélange de triméthylglycine se situe dans une plage de 2 % en poids à 9 % en poids.

5. Utilisation, appareil d'impression à jet d'encre ou procédé d'impression à jet d'encre selon la revendication 4, dans lesquels la quantité de mélange de triméthylglycine se situe dans une plage de 3 % en poids à 8 % en poids.

6. Utilisation, appareil d'impression à jet d'encre ou procédé d'impression à jet d'encre selon l'une quelconque des revendications 1 à 5, dans lesquels la quantité de mélange d'eau n'est pas inférieure à 70 % en poids.

7. Utilisation, appareil d'impression à jet d'encre ou procédé d'impression à jet d'encre selon la revendication 6, dans lesquels la quantité de mélange d'une substance qui comprend le pigment et les particules de résine à base d'acrylique et dont la substance simple est solide à température normale, la quantité de mélange d'une substance qui est différente de l'eau et qui est liquide à température normale, et la quantité de mélange de l'eau satisfont la condition (Z) suivante :

$$\text{Condition (Z) : } L < S < W,$$

S : quantité de mélange (% en poids) de la substance dont la substance simple est solide à température normale,
L: quantité de mélange (% en poids) de la substance qui est liquide à température normale, et
W : quantité de mélange (% en poids) est de l'eau.

EP 4 067 446 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015361285 A
- EP 1266941 A
- US 2016376456 A
- US 2013281593 A
- JP 8003498 A
- US 5609671 A
- JP 2000513396 W
- US 5837045 A
- JP 2008524400 W
- US 20060201380
- JP 2009515007 W
- US 20070100024
- US 20070100023 A
- JP 2011515535 W
- US 20090229489